# EUROPEAN PATENT APPLICATION

(11) **EP 2 309 607 A1**
(43) Date of publication of application: **13.04.2011**
(21) Application number: 09172522.6
(22) Date of filing: 08.10.2009
(51) Int. Cl.: H01R 13/73, H01R 11/01, H01R 13/11, F03D 9/00, H02G 3/00

(54) **Electrical connector**

(71) Applicant: Draka Denmark Copper Cable A/S, 2605 Brøndby (DK)
(72) Inventor: Hack, Horst Rudolf, 24634, Arpsdorf (DE); Lokke, Steen Korsholm, 4600, Køge (DK)
(74) Representative: Boesen, Johnny Peder

(57) **Abstract**

Disclosed is an electrical connector part (101) having a first end (111) adapted to be connected to a first cable and a second end (112) adapted to receive, a corresponding opposite connector part connected to a second cable for creating an electrical connection between the first cable and the second cable; wherein the connector part further comprises positioning means arranged at the exterior of the connector part for positioning the connector part to a fixating structure, wherein the positioning means comprises at least two walls (103) (104) protruding from the exterior of the connector part, the walls (103) (104) having edges defining a plane allowing the connector part to be placed at a planar surface, and the walls further defining a recess between them for receiving a positioning rail.

Using an electrical connector as described above the installation cost of installing cable systems in windmills can be lowered.

## Description

### Field of the invention

The present invention relates to cable installation in windmills, more specifically to low cost cable installations in windmills.

### Background of the invention

Climate changes as a result of the outlet of greenhouse gases from the usage of fossil fuels such as oil and gas is becoming an increasing problem. This has led politicians and energy companies all over the world to search for alternative ways of producing energy. The use of sustainable energy sources, such as wind energy has shown a large potential.

Wind farms are being built with the potential to produce more energy than a nuclear power plant. Currently the largest problem facing companies producing wind energy is the price. The cost of producing electricity using wind energy is still significantly higher than the cost when using fossil fuels.

To make the switch from fossil fuels to wind energy acceptable on the economy, the cost of wind energy has to be reduced. The installation cost of wind turbines is a large expense. Modern wind turbines is produced in modules and assembled on site. The generator is typically placed in the top of the wind turbine, connected by large power cables to a converter in the bottom, for distributing the generated energy. The installation of these cables is an expensive and dangerous task as the height of the largest wind turbines is approaching 200 meters.

Fixing long lengths of cables involves lifting of heavy loads. This is a risky operation and there is a high risk that either materiel or personnel gets damaged by falling cables. Alternatively shorter cable sections may be assembled on site. This however requires skilled electricians to connect each stretch of cable with the next in the series. Studies show that the connections mentioned show inferior quality in some cases. Further the method involve a high degree of work hours on site, which is difficult to plan as on-site work is relying on many parameters, like locally hired people and weather conditions.

W02006096706 discloses a cable system for installing cables in windmills. The cables system comprises a first and a second group of power cables for conducting electricity generated by a windmill, where electrical connectors are mounted on said first and second groups allowing said first and second groups to be detachable electrical connected. By producing the cables in sections and using electrical connectors to connect the section on side the installation cost of the cables can be lowered.

However it is a problem with the above prior art that the connectors have a significantly larger diameter than the cable. This increases the spatial requirement of the system.

Thus there is a need of an improved method/system/device for decreasing the installation costs of power cables in wind turbines, thereby lowering the overall cost of wind energy making it a more attractive choice for energy companies.

### Summary

According to a first aspect, embodiments of an electrical connector part for use with power cables in wind turbines described herein have,
a first end adapted to be connected to an end of a first cable and a second end adapted to receive, along a longitudinal axis of the connector part, a corresponding opposite connector part, connected to an end of a second cable, for creating an electrical connection between the first cable and the second cable;
wherein said second end comprises electrical contact means for creating an electrical connection with an opposite connector part, where said electrical contact means have an elongated cross section.

The size of a connector is governed by the required connector resistance. The contact area of a connector is directly proportional to the connector resistance. A large contact area results in a low resistance and a small contact area results in a large resistance. A high connector resistance will result in a high heat production. This will lower the lifetime of the connector, increase the demands of the material properties of the structures in proximity of the connector and increase the overall energy loss.

The spatial demands of a windmill cable system is controlled by the heat production of the cables/connectors and the width of the cables/connectors. Typically the cables are placed apart with a distance equal to the width of the cables/connectors, to allow the heat produced by the cables/connectors to be transported away. By making the cross-section of the electrical contact means elongated, both a large contact area and a narrow width of the connector part can be obtained, lowering the connector resistance and the spatial requirements of cable system.

This will make a cable system utilizing a connector part according to the present invention safer and faster to install, decreasing the need for specialized man hours without increasing the spatial requirements of the cable system, thereby lowering the overall cost of wind energy.

In some embodiments the cross-section of the electrical contact means have a first dimension of length L and a second dimension of length M perpendicular to the first dimension, wherein L is at least 1.25 times M.

By letting L be at least 1.25 times M, a low connector resistance and a narrow connector width is achieved.

In some embodiments the cross-section of the electrical contact means have a first dimension of length L and a second dimension of length M perpendicular to the first dimension, wherein L is at least 1.5 times M.

By letting L be at least 1.5 times M, an even lower connector resistance and a narrower connector width is achieved.

In some embodiments the cross-section of the electrical contact means have a first dimension of length L and a second dimension of length M perpendicular to the first dimension, wherein L is at least 1.8 times M.

By letting L be at least 1.8 times M, an even lower connector resistance and a narrower connector width is achieved.

According to a second aspect, embodiments of the invention relates to an electrical connector part having,

a first end adapted to be connected to an end of a first cable and a second end adapted to receive, along a longitudinal axis of the connector part, a corresponding opposite connector part connected to an end of a second cable for creating an electrical connection between the first cable and the second cable;
wherein the connector part further comprises positioning means arranged at the exterior of the connector part for positioning the connector part to a fixating structure, wherein said positioning means comprises at least two walls protruding from the exterior of the connector part, said walls having edges defining a plane parallel to said longitudinal axis and allowing the connector part to be placed at a planar surface, and said walls further defining a recess between them for receiving a positioning rail.

By providing the connector part with positioning means, the connector part can easily be used in both existing wind turbine tower systems and in future designs, adapted for use of the present invention. The fixating structures currently used in most wind turbines are cable ladders. Cable ladders have a shape like a normal ladder, allowing cables to be fixed to the rungs using flexible fixating devices such as cable ties. The protruding walls create a stable contact surface allowing the connector part to be fixated easily to a rung of a cable ladder.

The recess formed by the two walls further enables the connector to be installed on a positioning rail. By using positioning rails for fixating the connector part, an even faster and more secure installation of the cables is achieved. The use of positioning rails further makes it easier to control the distance between different cables. This increases the quality of the installation.

In some embodiments the connector part further comprises a support structure positioned at the exterior of said connector part adapted to receive a flexible fixating device.

By providing the connector part with a support structure, the connector part can be installed more securely and stable using flexible fixating devices such as cable ties. The flexible fixating device may circle the connector part and a fixating structure such as a cable ladder or a positioning rail, tying the connector part to the fixating structure. The support structure may function to prevent the connector part to move along the longitudinal axis, relative to the flexible fixating device.

In some embodiments the support structure is a protruding wall. The protruding wall may be positioned on the opposite side of the positioning means, on the sides perpendicular to the side comprising the positioning means or on any combinations of the sides of the connector part. The protruding wall of the support structure may be perpendicular to the walls of the positioning means.

By using a protruding wall as a support structure, the connector part can be fixated securely and stable. When the protruding wall of the support structure is perpendicular to the walls of the positioning means, the torque of the connector part when installed is lowered securing an even more stable fixation.

In some embodiments the support structure is a recess in the exterior of the connector part. By using a recess as a support structure, movement of a flexible fixating device is prevented in all directions.

In some embodiments the electrical connector part comprises indicating means for indicating properties of the cable connected to the connector part. The indicating means may be positioned on the exterior of the connector part. The indicating mean may have a colouring different than the colouring of the exterior of the electrical connector. The indicating means may be positioned on the opposite side of the positioning means.

Typically a three phase generator is used in wind turbines. To transport the generated electricity down from the generator to the transformer, three power cables are used, one for each phase. By providing the electrical connector part with indicating means, the chance of mixing up the phases and damaging the transformer is lowered. In some system different cable diameters are used. In such system the indicating means may be used to indicate the size of the cable connected to the connector part, thereby lowering the risk of mismatching cables sizes with potential catastrophic effects.

In some embodiments the electrical connector part, further comprises mechanical coding means for preventing unwanted electrical connection with a similar opposite connector part having an incompatible opposite mechanical coding.

By providing the electrical connector part with mechanical coding means, it becomes physical impossible to mix up the connections of different cables. This eliminates the risk mismatching cables.

In some embodiments the electrical connector part further comprises a sealing structure enabling a seal to be formed when said connector part is connected to a corresponding opposite connector part. The sealing structure may be a small hole. The sealing structure I may be positioned in proximity of the second end of the connector part.

A safer system results by providing the connector part with a sealing structure. The seal will allow a technician to examine if the connector has been taken apart.

In some embodiments the electrical connector part further comprises gripping means positioned on the exterior of said electrical connector part. The gripping means may be protruding structures on the connector part. The gripping means may be a plurality of structures. The gripping means may be perpendicular to the longitudinal axis.

By providing the electrical connector with gripping means it becomes easier for an installation contractor to assemble or dissemble a connector pair. The gripping means in addition lowers the risk for an installation contractor to drop a connector part attached to a cable. This is a potential very dangerous situation, since the cable may weigh more than 500 Kg and may be dropped at a height of up to 200 m.

In some embodiments the exterior of the connector part is made of a plastic material. By using plastic materials the weight of the connector part is decreased, making the installation easier.

The invention also relates to use of an electrical connector part as described above for installing cables in windmill towers.

The invention also relates to a system comprising a plurality of connector parts, wherein at least two connector parts have a different mechanical coding.

In one embodiment the connector part is adapted for use for transporting electricity generated in a wind turbine.

In one embodiment the connector part is adapted to be connected to a cable having a core diameter of at least m.

In one embodiment the connector part is adapted to be connected to a cable having a core diameter of at least 2 cm.

In one embodiment the connector part is adapted to be connected to a cable having a core diameter of at least 2.5 cm.

In one embodiment the connector part is adapted to be connected to a cable having a core diameter of at most 10 cm.

In one embodiment the connector part is adapted to be connected to a cable having a core diameter of at most 5 cm.

In some embodiments the cross-section of the connector part has a first dimension of length L and a second dimension of length M perpendicular to the first dimension, wherein L is at least 1.25 times M.

In some embodiments the cross-section of the connector part have a first dimension of length L and a second dimension of length M perpendicular to the first dimension, wherein L is at least 1.5 times M.

In some embodiments the cross-section of the connector part have a first dimension of length L and a second dimension of length M perpendicular to the first dimension, wherein L is at least 1.7 times M.

In some embodiments the cross-section of the electrical contact means have a first dimension of length L and a second dimension of length M perpendicular to the first dimension, wherein L is below 4 times M.

The different aspects of the present invention can be implemented in different ways including the electrical connecter parts described above and in the following and further product means, each yielding one or more of the benefits and advantages described in connection with at least one of the aspects described above, and each having one or more preferred embodiments corresponding to the preferred embodiments described in connection with at least one of the aspects described above and/or disclosed in the dependant claims. Furthermore, it will be appreciated that embodiments described in connection with one of the aspects described herein may equally be applied to the other aspects.

### Brief description of the drawings

The above and/or additional objects, features and advantages of the present invention, will be further elucidated by the following illustrative and nonlimiting detailed description of embodiments of the present invention, with reference to the appended drawings, wherein:
Fig. 1a shows a perspective view of a connecter part according to an embodiment of the present invention.
Fig. 1b shows a side view of a connecter part according to an embodiment of the present invention.
Fig. 1c shows a bottom side view of a connecter part according to an embodiment of the present invention.
Fig. 1d shows a top view of a connecter part according to an embodiment of the present invention.
Fig. 2a shows a front view of a connecter part according to an embodiment of the present invention having male electrical contact means.
Fig. 2b shows a front view of a connecter part according to an embodiment of the present invention having female electrical contact means.
Fig. 3 shows a perspective view of a connecter part according to an embodiment of the present invention having gripping means.
Fig. 4 shows a cable system comprising connecter parts according to an embodiment of the present invention.
Fig. 5 shows a connecter comprising connecter parts according to an embodiment of the present invention, fixated to a rail.
Fig. 6 shows a perspective view of two similar opposite connector parts, according to an embodiment of the present invention.

### Detailed description

In the following description, reference is made to the accompanying figures, which show by way of illustration how the invention may be practiced.

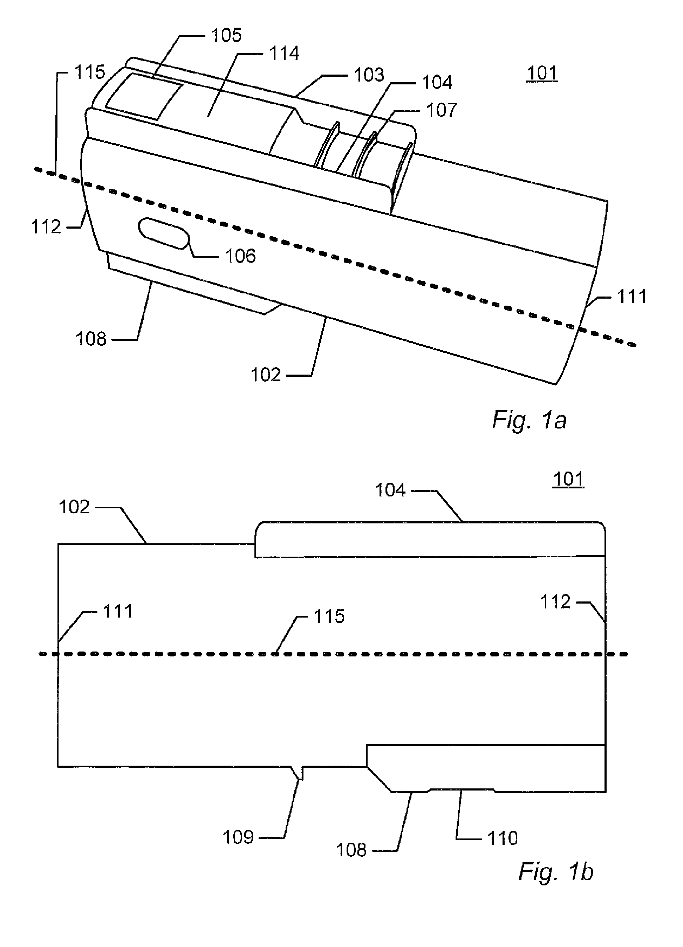

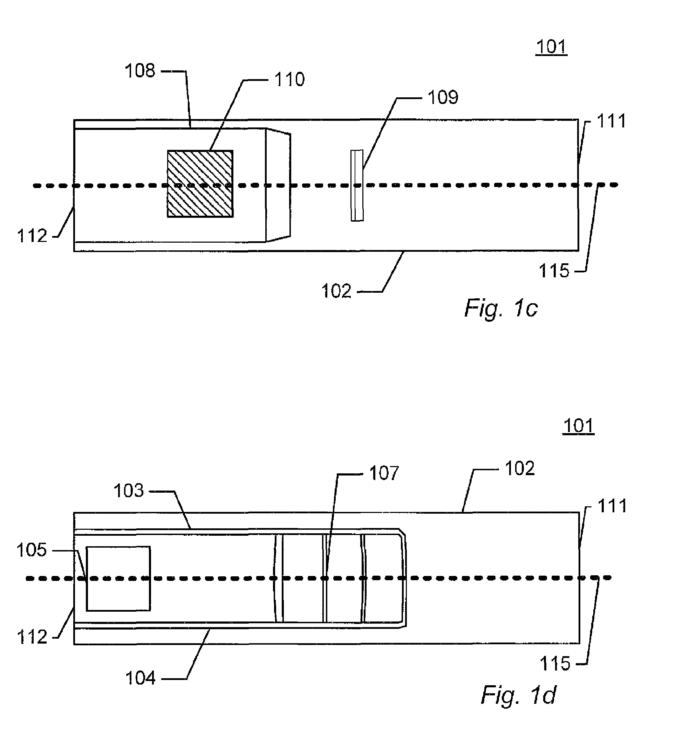

Figure 1a-d shows an electrical connector part 101 according to an embodiment of the present invention. The electrical connector part 101 have a first end 111 adapted to be connected to a first cable and a second end 112 adapted to receive a corresponding opposite connecter part along a longitudinal axis 115. The electrical connector part 101 may comprise positioning means 103, 104, 107. The positioning means 103, 104, 107 enables the electrical connector part 101 to be easily fitted to a fixating structure such as a cable ladder or a positioning rail. The positioning means 103, 104, 107 may comprise two walls 103, 104 protruding from the exterior of the connector part 101. The two walls 103, 104 may be parallel and may have an equal height. The two walls 103, 104 may further define a plane parallel to the longitudinal axis 115, enabling the electrical connector part 101 to securely be fixated to a planer fixating structure such as a rung of a cable ladder. The two walls 103, 104 may form a recess 114 between them enabling the electrical connector part 101 to be fixated to a positioning rail. The two walls 103, 104 may be made of a flexible material enabling the connector part 101 to be fitted to a positioning rail with a frictional fit. The recess 114 may be fitted with a number of crossbar/s 107, for stabilising the two walls 103, 104. A hole 105 may be present in the recess 114. The hole 105 may be adapted to receive a fastening contact of an corresponding opposite connector part.

The electrical connector part 101 may further comprise indicating means 106, 108, 110 for indicating properties of the cable connected to the electrical connector part 101, such as the cable thickness, the cable insulation or the cable type e.g cobber cable, aluminium cable etc. Alternatively the indicating means 106, 108, 110 may indicate properties of the connection of the cable, such as the phase of the generator the cable is connected to. The indicating means 106, 108, 110 may comprise a colour part 110 with a colouring different than the colouring of the main portion of the connector part 101. In one embodiment the indicating means 106, 108, 110 is a hole 106 in the connector part 101. The hole 106 may allow a user of the connector part 101 to se a portion of a similar opposite connector part assembled with the connector part 101, allowing the user to gain information of that similar opposite connector part.

The connector part 101 may further comprise a support structure 109. The support structure 109 may be a wall protruding from the outside of the connector part 101. Alternatively, not shown, the support structure may be a recess. The support structure 109 may be positioned on the opposite side of the connector part 101 of the positioning means 103, 104, 107.

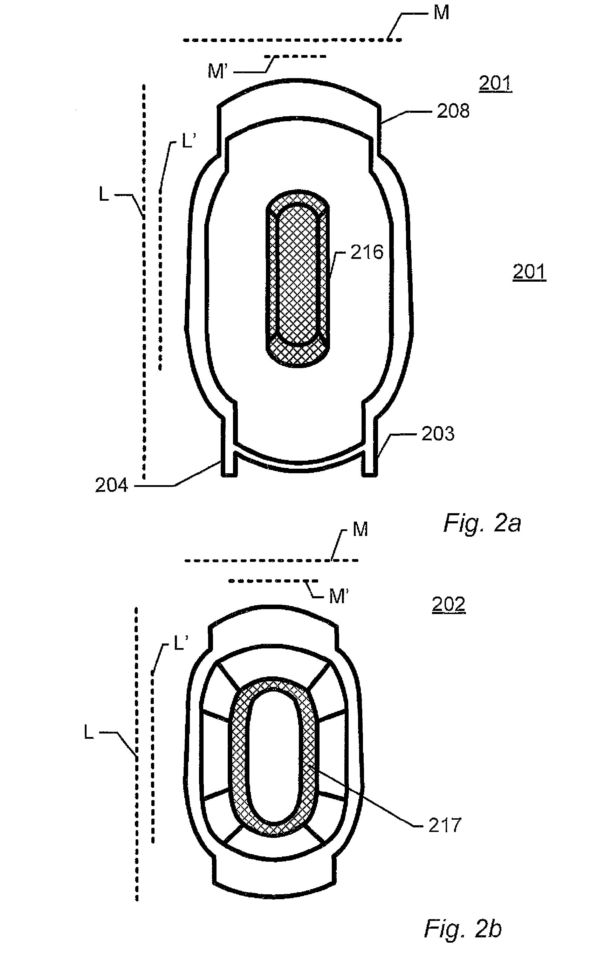

Figure 2a shows a front view of an electrical connector part 201 according to an embodiment of the present invention. In this embodiment the electrical connector part 201, has male electrical contact means 216. The male electrical contact means 216 has a cross-section with a first dimension M' and a second dimension L', where the first and second dimensions are perpendicular. Preferably L' is larger than M'. Preferably L' is at least 1.25 times large than M', more preferably L' is at least 1.5 times larger than M', even more preferably L' is at least 1.8 times larger than M'. The connecter part 201 have a cross-section with a first dimension M and a second dimension L, where M and L is perpendicular. Preferably L is larger than M. Preferably L is at least 1.2 times large than M, more preferably L is at least 1.5 times larger than M, even more preferably L is at least 1.7 times larger than M.

Figure 2b shows a front view of an electrical connector part 202 according to an embodiment of the present invention. In this embodiment the electrical connector part 202, have female electrical contact means 217. The female electrical contact means 217 has a cross-section with a first dimension M' and a second dimension L', where the first and second dimensions are perpendicular. Preferably L' is larger than M'. Preferably L' is at least 1.25 times large than M', more preferably L' is at least 1.5 times larger than M', even more preferably L' is at least 1.8 times larger than M'. Also the connecter part 202 have cross-section with a first dimension M and a second dimension L, where M and L is perpendicular. Preferably L is larger than M. Preferably L is at least 1.2 times large than M, more preferably L is at least 1.5 times larger than M, even more preferably L is at least 1.7 times larger than M.

By having elongated electrical contact means 216, 217, the width M of the electrical connector parts 201, 202 can be kept small while the electrical contact area can be larger. This enables the electrical connectors to be narrow and still have a small connector resistance. The spatial requirements of the electrical connectors can thereby be kept small.

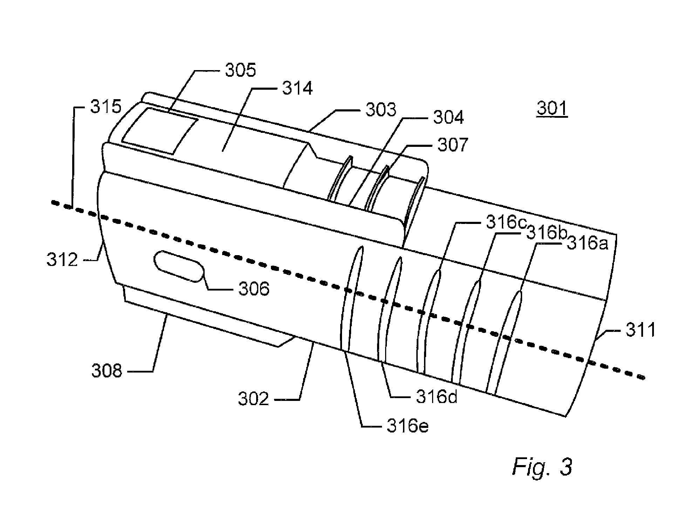

Figure 3 shows an electrical connector part 301 according to an embodiment of the present invention. The electrical connector part comprises a number of gripping means 318a-e. In this embodiment five gripping means are shown however any number may be used. The gripping means 316a-e may be positioned on the longest side of the electrical connector part 301. The gripping means 316a-e may protrude from the exterior of the electrical connector part 301. The gripping means 316a-e may be recesses in the exterior of the electrical connector part 301. The gripping means 316a-e may be made of a different material than the main part of the exterior of the electrical connecter part 301. The gripping means 316a-e may be made of a high friction material such as a rubber or rubber like material.

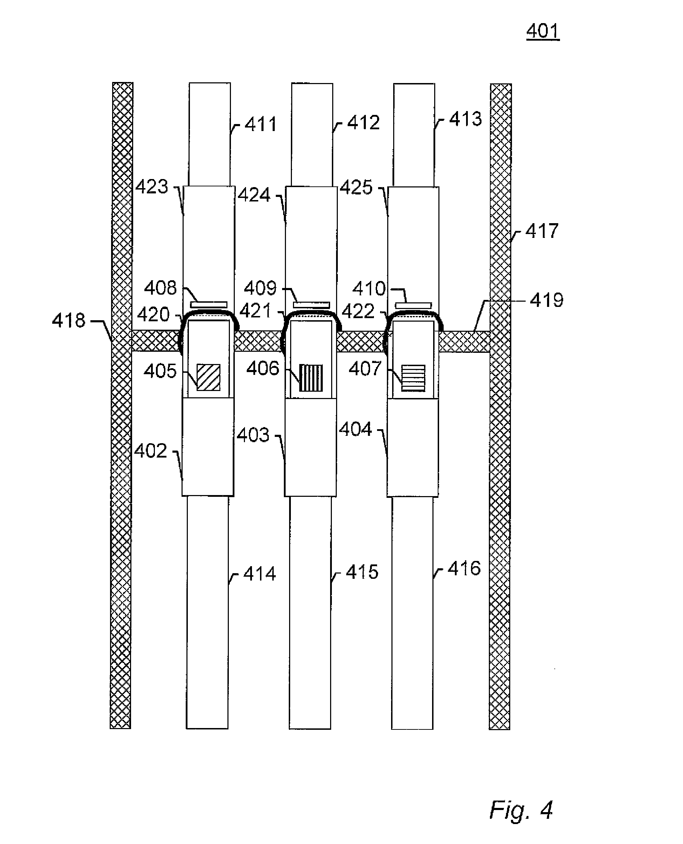

Figure 4 shows a cable system 401 according to an embodiment of the present invention. The cable system 401 comprises three connecters comprised of two connector part each 402 and 423, 403 and 424, 404 and 425, where each connector is connected to two cables sections 411, 412, 413, 414, 415, 416. Each connecter 402 and 423, 403 and 424, 404 and 425 comprises indicating means 405, 406, 407. The indicating means 405, 406, 407 in this embodiment, indicate which phase of the generator the cables are connected to. The connectors 402 and 423, 403 and 424, 404 and 425 further comprises a support structure 408, 409, 410. The connectors 402 and 423, 403 and 424, 404 and 425 is fixated to a rung 419 of a cable ladder 417, 418, 419 using a flexible fixating device 420, 421, 422 such as a cable tie. The support structure 408, 409, 410 secures the connectors from up and down movement in the direction of the legs 418, 417 of the cable ladder 417, 418,419.

By having connector with elongated electrical contact means, the width of the connectors can be kept small, only a bit larger than the width of the cable, while the connecter resistance can be kept at a level of the cable resistance.

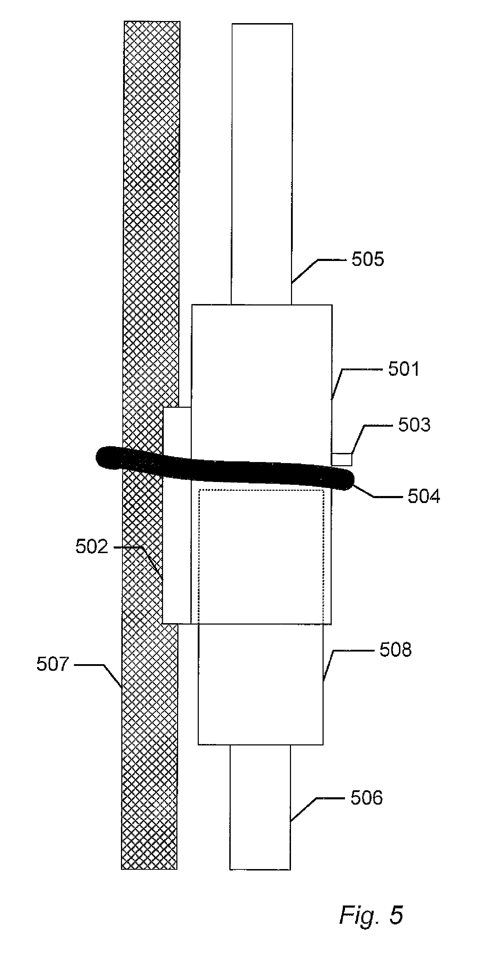

Figure 5 shows an electrical connector fixated to a positioning rail 507. The positioning rail 507 may be any rail suitable for fixating an electrical connector, such as a DIN DS35 rail. The electrical connector comprises two similar opposite connector parts 501, 508 each connected to a cable section 505, 506. The electrical connector further comprises positioning means 502 for fixating the connector to the positioning rail 507. The positioning means 502 may comprise two walls comprising the positioning rail 507. The two walls may attach the electrical connector to the positioning rail 507 with a frictional fit. The electrical connector may further comprise a support structure 503. The electrical connector may be fixated to the positioning rail 507 by a flexible fixating device 504.

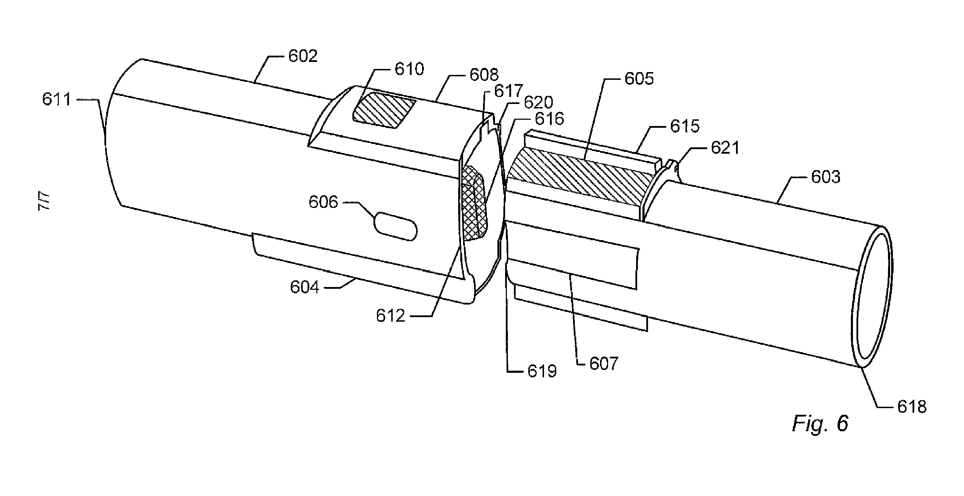

Figure 6 shows a first connector part 602 and a second connector part 603, according to an embodiment of the present invention. The first connector part 602 comprises a first end 611 adapted to be connected to a cable and a second end 612 adapted to receive a similar opposite connector part 603. The first connector part 602 further comprises positioning means 604 for fixating the connector part to a fixating structure such as a cable ladder of positioning rail and indicating means 606, 608, 610, 617. The indicating means 606, 608, 610, 617 may comprise a colour part 610 with a colouring different than the colouring of the main portion of the first connector part 602. The first connector part 602 further comprise electrical contact means 616 of a male type.

The second electrical connector part 603 is adapted to be inserted into the first electrical connector part 602. The second connector part 603 comprises indicating means 605, 607, 615. The indicating means 605, 607, 615 may comprise a colour part 605 with a colouring different than the colouring of the main portion of the second connector part 603. The colour part 605, 610 of the first and the second connector part 602, 603 may be used to show compatibility between the first and second connector part 602, 603. Connector parts designed to be connected may use the same colour coding.

The second connector part 603 may further comprises an information space, 607 for inserting information. The information space 607 in the second connector part 603 may be aligned with the hole 606 in the first connector part 602 such that when the first and second connector parts are connected the information stored in the information space 607 in the second connector part 603 is visible through the hole 606 in the first connector part 602.

The first connector part 602 may further comprise first mechanical coding means 617. In this embodiment the first mechanical coding means 617 in the first connector part 602 is a recess. The second connector part 603 comprises second mechanical coding means 615 compatible with the first mechanical coding means 617 of the first connector part 601. The second mechanical coding means 615 is in this embodiment a ridge. The mechanical coding means 615, 617 secures that the connector parts 602, 603 from being connected to incompatible connecter parts, since the position of their ridges or recesses differ.

The first and second connector part 602, 603 may further comprise a sealing structure 620, 621 enabling a seal to be formed when the first and second connector parts 602, 603 are connected. In this example the sealing structure 620, 621 is a hole in the outer casing of the electrical connector parts 602, 603. When the electrical connector parts 602, 603 are connected the sealing structures 620, 621 are aligned allowing a thread to pass through, thereby creating a seal.

Although some embodiments have been described and shown in detail, the invention is not restricted to them, but may also be embodied in other ways within the scope of the subject matter defined in the following claims. In particular, it is to be understood that other embodiments may be utilised and structural and functional modifications may be made without departing from the scope of the present invention.

In device claims enumerating several means, several of these means can be embodied by one and the same item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

## Claims

1. An electrical connector part (101) having a first end (111) adapted to be connected to an end of a first cable and a second end (112) adapted to receive, along a longitudinal axis of the connector part (101), a corresponding opposite connector part connected to an end of a second cable for creating an electrical connection between the first cable and the second cable; wherein the connector part further comprises positioning means arranged at the exterior of the connector part for positioning the connector part to a fixating structure, **characterized in that** said positioning means comprises at least two walls (103) (104) protruding from the exterior of the connector part, said walls (103) (104) having edges defining a plane parallel to said longitudinal axis and allowing the connector part to be placed at a planar surface, and said walls (103) (104) further defining a recess between them for receiving a positioning rail.

2. An electrical connector part (101) according to claim 1, wherein the connector further comprises electrical contact means (216), where said electrical contact means has an elongated cross-section.

3. An electrical connector part (101) according to claim 2, wherein the cross-section of said electrical contact means (216) has a first dimension of length L and a second dimension of length M perpendicular to said first dimension, wherein L is at least 1.25 times M.

4. An electrical connector part (101) according to claim 2, wherein the cross-section of said electrical contact means (216) has a first dimension of length L and a second dimension of length M perpendicular to said first dimension, wherein L is at least 1.7 times M.

5. An electrical connector part (101) according to anyone of the above claims, wherein the connector part (101) further comprises a support structure (109) positioned at the exterior of said connector part (101) adapted to receive a flexible fixating device.

6. An electrical connector part (101) according to claim 5, wherein the support structure (109) is a protruding wall positioned on the opposite side of the positioning means approximately perpendicular to the walls of the fixating section.

7. An electrical connector part (101) according to claim 5, wherein the support structure (109) is a recess in the exterior of the connector part (101).

8. An electrical connector part (101) according to anyone of the above claims, further comprising indicating means (110) for indicating the cable connected to the connector part.

9. An electrical connector part (101), according to any of the above claims, further comprising mechanical coding means (608) (615) for preventing unwanted electrical connection with a similar opposite connector part having an incompatible opposite mechanical coding.

10. An electrical connector part (101) according to anyone of the above claims, further comprising a sealing structure (620) (621) enabling a seal to be formed when said connector part (101) is connected to a corresponding opposite connector part.

11. An electrical connector part (101) according to anyone of the above claims, further comprising gripping means (316a) (316b) (316c) (316d) (316e) positioned on the exterior of said electrical connector part.

12. Use of an electrical connector part (101) according to anyone of the above claims, for installing cables in windmill towers.

13. A system comprising a plurality of connector parts (101) according to claim 9, wherein at least two connector parts have a different mechanical coding.

14. An electrical connector part (101) for use with power cables in wind turbines having a first end (111) adapted to be connected to an end of a first cable and a second end adapted to receive, along a longitudinal axis of the connector part, a corresponding opposite connector part, connected to an end of a second cable, for creating an electrical connection between the first cable and the second cable;
**characterized in that** said second end comprises electrical contact means (216) for creating an electrical connection with an opposite connector part, where said electrical contact means (216) have an elongated cross section.

15. An electrical connector part (101) according to claim 14, wherein the connector part (101) further comprises positioning means arranged at the exterior of the connector part for positioning the connector part to a fixating structure where said positioning means comprise at least two walls (103) (104) protruding from the exterior of the connector part, said walls (103) (104) having edges defining a plane parallel to said longitudinal axis and allowing the connector part (101) to be placed at a planar surface, and said walls (103) (104) further defining a recess between them for receiving a positioning rail.
